# EUROPEAN PATENT SPECIFICATION

(11) **EP 2 309 580 B1**
(45) Date of publication and mention of the grant of the patent: **03.04.2013**
(21) Application number: 10382264.9
(22) Date of filing: 08.10.2010
(51) Int. Cl.: H01M 8/12, H01M 8/24, H01M 8/02

(54) **Solid oxide fuel stack**
Festoxidbrennstoffstapel
Pile de combustible d'oxyde solide

(30) Priority: 09.10.2009 ES 200930826
(43) Date of publication of application: 13.04.2011
(73) Proprietor: Ikerlan, S. Coop., 20500 Arrasate-Mondragon (ES)
(72) Inventor: Laresgoiti Rementeria, Ander, 48250, IURRETA (Bizkaia) (ES); Olave Irizar, Mireia, 20500, Arrasate-Mondragón (ES); Manzanedo Gabilondo, Jaio, 20500, ARRASATE-MONDRAGON (ES)
(74) Representative: Igartua, Ismael

(56) References cited:
- EP-A1- 1 806 800
- US-A1- 2004 234 830
- US-A1- 2007 003 818

## Description

### TECHNICAL FIELD

This invention relates to solid oxide fuel stacks that comprise at least one metal-supported cell and at least one attached interconnector.

### PRIOR ART

There are known in the state of the art, solid oxide fuel stacks comprising a plurality of tubular solid oxide fuel cells, which operate at high temperatures within an approximate range of 600 to 1000ºC, and which, depending on the type of support used, may be categorised as tube-shaped solid oxide fuel cells with a cathode support, anode support, electrolyte support or metal support.

Tubular solid oxide fuel cells comprise a structure formed by an internal electrode, an electrolyte deposited on the internal electrode, an external electrode deposited on the electrolyte, and in the case of metal-supported tubular cells, a metal support deposited mainly on the external electrode.

One of the problems to be resolved in this type of fuel stacks is the difficulty of forming an electrical connection between the respective cells, given that this type of cell operates at high temperatures, and the interconnectors must be designed in such a way that they are sufficiently flexible to maintain proper electrical contact, and must also withstand large thermal cycles. The interconnectors must also have an optimum contact surface to prevent a reduction in the power density of the cells.

There are known different solutions, described for example in documents WO2006/017777A2, US5258240 and US7157172B2, which describe fuel stacks that comprise anode and/or cathode-supported tubular cells in which each tubular cell comprises a built-in interconnector that comes into contact with the internal electrode. The electrical connection between the built-in interconnector in a tubular cell and the external electrode of another adjacent tubular cell is formed by individual nickel interconnectors positioned between the adjacent cells or by mesh or metal supports positioned between the tubular cells.

### BRIEF DISCLOSURE OF THE INVENTION

The object of this invention is to provide a solid oxide fuel stack comprising at least one solid oxide fuel cell and at least one interconnector associated to the solid oxide fuel cell according to the claims.

The solid oxide fuel cell comprises a first electrode, an electrolyte deposited on the first electrode, a second electrode deposited on the electrolyte, and a metal support arranged on the second electrode.

In addition, the interconnector comprises contact means adapted for the electrical contact with the metal support, said contact means being arranged to resiliently support the solid oxide fuel stack by the application of contact pressure. The contact is ensured even at high temperatures for long periods of time.

The flexibility of the contact means allows the interconnector to remain in contact with the metal support at all times regardless of the irregularities in shape that the solid oxide fuel cell may present both longitudinally and transversally.

In addition, the interconnector has a compact and simple design that enables the fitting of the solid oxide fuel cell.

These and other advantages and characteristics of the invention will be made evident in the light of the drawings and the detailed description thereof.

### DESCRIPTION OF THE DRAWINGS

Figure 1 is a front view of a first embodiment of a solid oxide fuel stack according to the invention.
Figure 2 is a view in perspective of the solid oxide fuel stack shown in Figure 1.
Figure 3 is a front view of a second embodiment of the solid oxide fuel stack according to the invention.
Figure 4 is a front view of a third embodiment of the solid oxide fuel stack according to the invention.
Figure 5 is a front view of a fourth embodiment of the solid oxide fuel stack according to the invention.
Figure 6 is a front view of a fifth embodiment of the solid oxide fuel stack according to the invention.
Figure 7 is a view in perspective of the solid oxide fuel stack shown in Figure 6.

### DETAILED DISCLOSURE OF THE INVENTION

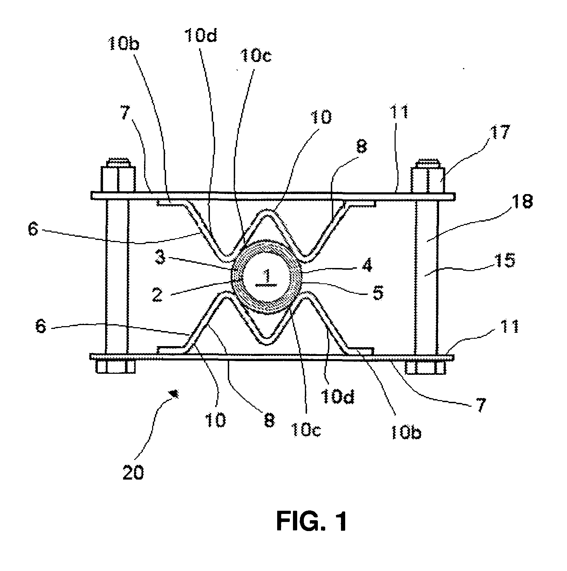

Figures 1 to 7 illustrate implementations of a solid oxide fuel stack 20 comprising at least one tubular solid oxide fuel cell 1 and interconnectors 6 associated to the solid oxide fuel cell 1.

Each tubular solid oxide fuel cell 1, shown in detail in Figure 1, comprises a first electrode 2, an electrolyte 3 deposited on the first electrode 2, a second electrode 4 deposited on the electrolyte 3, and a metal support 5 arranged fixed on the second electrode 4. The first electrode 2 is the anode and the second electrode 4 is the cathode, the materials of the first electrode 2, the second electrode 4 and the electrolyte 3 being known in the prior art.

In the implementations of Figures 1 to 7 each solid oxide fuel cell 1 is associated to two interconnectors 6 arranged substantially parallel to, and facing each other.

Each interconnector 6 comprises support means 7, which include a substantially rectangular and rigid support plate 11, and contact means 8 through which the electrical contact of the interconnector 6 with the metal support 5 of the solid oxide fuel cell 1 is achieved. The contact means 8 are arranged fixed to the support plate 11 by welding or any other known means, and are flexible in relation to said support plate 11.

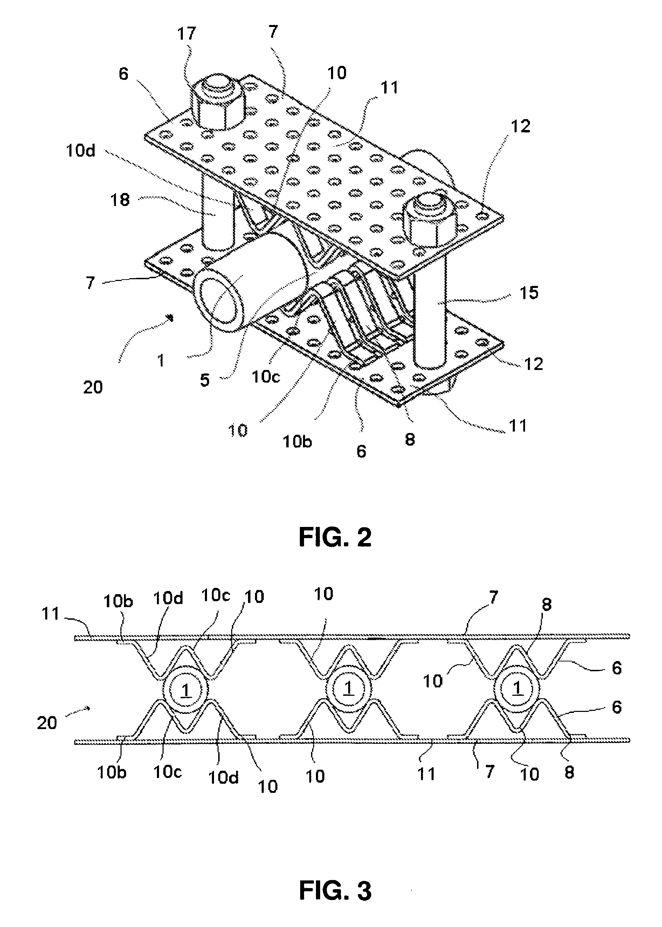

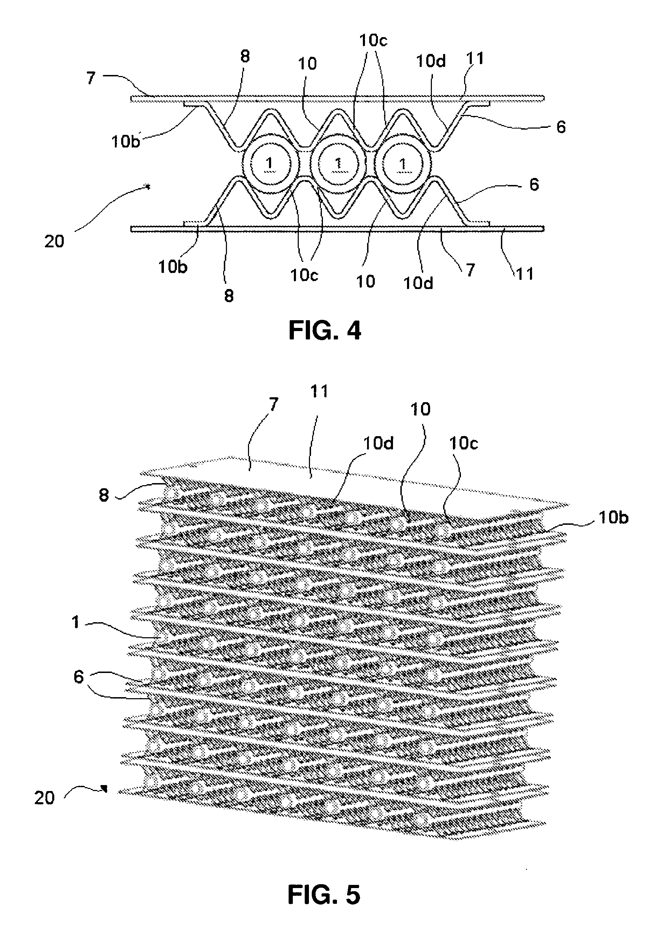

The support plate 11 preferably has a thickness of between approximately 0.5 and 1 mm, and may include, as shown in Figures 2 and 5, holes 12 arranged equidistantly along the support plate 11 with the object of improving the circulation of air towards the fuel cell 1.

In Figures 1 to 7 the support plates 11 and therefore the interconnectors 6 are arranged substantially horizontally. In other examples, not shown in the figures, said support plates 11 may be positioned substantially vertically.

In addition, the corresponding interconnector 6 is arranged preloaded in relation to the metal support 5 with the aim of ensuring proper electrical contact at all times with the tubular fuel cell 1. To achieve this the solid oxide fuel stack 20 comprises preload means 15, shown in Figures 1 and 2. The preload means 15 comprise screws 18, each one of which pass through the support plates 11 arranged facing each other, and nuts 17 through which the screws 18 are fixed to the corresponding support plates 11, the interconnectors 6 maintaining a prefixed pressure against the solid oxide fuel cell 1 thanks to the preload in the screws 18.

In other embodiments not shown in the figures, the preload means 15 may include an external weight on at least one of the support plates 11 or preloaded springs arranged between the two support plates 11 of two interconnectors 6 facing each other, thereby ensuring the permanent contact between the corresponding interconnector 6 and the solid oxide fuel cell 1.

In addition, the contact means 8 comprise a contact plate 10,16 that includes at least one substantially flat fixing surface 10b,16b, through which the contact plate 10,16 is fixed to the support plate 11, and at least one contact surface 10c,16c flexible in relation to the fixing surface 10b,16b, adapting itself to the possible irregularities in shape that the tubular fuel cell 1 may present, either on its circular perimeter or longitudinally, thereby securing the permanent electrical contact of the interconnector 6 with the tubular fuel cell 1. The contact means 8 also comprise connection surfaces 10d,16d that respectively connect each contact surface 10c,16c to the corresponding fixing surface 10b,16b.

In general terms, each interconnector 6 comprises a plurality of contact plates 10,16 that have a thickness of between approximately 0.5 mm and 1 mm, and are arranged transversally along the metal support 5 and substantially parallel and equidistant to each other.

In the embodiments shown in Figures 1 to 5, the contact plate 10 is substantially W-shaped. The contact plate 10 includes two substantially straight contact surfaces 10c, continuous and inclined to each other, a fixing surface 10b on each end of the contact plate 10, through which is fixed said contact plate 10 to the support plate 11, and the connection surfaces 10d that respectively connect each contact surface 10c to the corresponding fixing surface 10b.

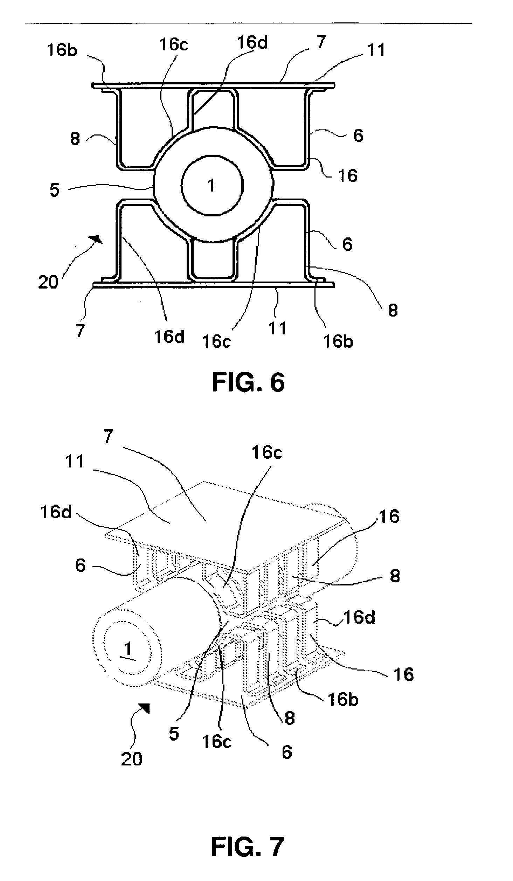

Additionally, in the embodiment shown in Figures 6 and 7, the contact plate 16 includes two substantially curved contact surfaces 16c adapted to the outer shape of the tubular fuel cell 1, and the connection surfaces 16d connecting the ends of the contact surfaces 16c to the corresponding fixing surfaces 16b. In other embodiments not shown in the figures, the contact surfaces 16c may be arranged substantially projecting outwards, being connected to the corresponding connection surface 16b only through one of its ends.

Figures 1, 2, 6 and 7 show a solid oxide fuel stack 20 comprising a single tubular fuel cell 1.

Figures 3 to 5 show a solid oxide fuel stack 20 comprising at least one row of tubular fuel cells 1, said fuel cells 1 being arranged substantially parallel and adjacent to each other, the preload means not being shown in the figures.

Figure 3 shows an embodiment of the invention in which the support plates 11 of the interconnectors 6 arranged adjacent to each other, associated to fuel cells 1 arranged adjacently, form a single support plate 11, the respective contact plates 10 being fixed to said single support plate 11.

In addition, figure 4 shows an embodiment of the invention in which the contact plates 10 of the interconnectors 6 arranged adjacent to each other, associated to adjacent fuel cells 1, form a single contact plate 10 that has contact surfaces 10c of each individual contact plate 10 connected to each other. Additionally, as in the preceding embodiment, the support plates 11 of the adjacent interconnectors 6 attached to adjacent fuel cells 1 form a single support plate 11.

Figure 5 shows a solid oxide fuel stack 20 comprising various rows of tubular cells 1 arranged adjacent and parallel to each other, wherein the interconnectors 6 corresponding to each row of tubular cells 1 are similar to the ones shown in figure 4.

In other embodiments not shown in the figures, the contact plate 10,16 may have a single contact surface 10c,16c with the tubular fuel cell 1, said single contact surface 10c,16c being flexible in relation to the connection surface 10b,16b and therefore to the corresponding support plate 11.

Finally, both the support plate 11 and the contact plate 10,16 are preferably made of a metal material capable of withstanding high temperatures, in excess of 800ºC, for long periods of time. The oxidation behaviour of the material must be good at high temperatures, it must be able to resist creep when subjected to a constant force, and must also be easily conformable.

## Claims

1. Solid oxide fuel stack comprising at least one tubular solid oxide fuel cell (1) and at least one interconnector (6) associated to the tubular solid oxide fuel cell (1), the tubular solid oxide fuel cell (1) comprising a first electrode (2), an electrolyte (3) deposited on the first electrode (2), a second electrode (4) deposited on the electrolyte (3), and a metal support (5) arranged on the second electrode (4), **characterised in that** the tubular solid oxide fuel cell (1) is associated to two interconnectors (6) arranged substantially parallel to each other and facing each other, each interconnector (6) comprising a rigid support plate (11) and contact means (8) comprising a plurality of contact plates (10;16) arranged transversally along the metal support (5), each contact plate (10;16) is fixed to the support plate (11) and comprises at least a contact surface (10c;16c) flexible in relation to the support plate (11) and adapted to secure the permanent electrical contact of each interconnector (6) with the tubular solid oxide fuel cell (1), and **in that** the solid oxide fuel stack comprise preload means (15) through which the interconnectors (6) maintains a prefixed pressure against the solid oxide fuel cell (1).

2. Solid oxide fuel stack according to claim 1, wherein the metal support (5) is tubular.

3. Solid oxide fuel stack according to any of the preceding claims, wherein the support plates (11) and the contact plates (10;16) are made of metal.

4. Solid oxide fuel stack according to any of the preceding claims, wherein the support plate (11) includes holes (12) that improve the air passage towards the tubular solid oxide fuel cell (1).

5. Solid oxide fuel stack according to any of the preceding claims, wherein each contact plate (10) comprise at least two contact surfaces (10c), continuous and inclined to each other, both of which are arranged in electrical contact with the metal support (5).

6. Solid oxide fuel stack according to the preceding claim, wherein each contact plate (10) has a W-shaped cross-section.

7. Solid oxide fuel stack according to any of claims 1 to 4, wherein each contact plate (16) comprise at least two contact surfaces (16c) which has a curved surface, adapted to the outer shape of the tubular solid oxide fuel cell (1), each contact surface (16c) having at least one end connected to a fixing surface (16b) through a connexion surface (16d), the fixing surface (16b) being fixed to the support plate (11).

8. Solid oxide fuel stack according to any of the preceding claims, comprising at least one row of tubular solid oxide fuel cells (1) arranged adjacent to each other, wherein the contact plates (10;16) of the interconnectors (6) arranged adjacently form a single contact plate (10;16).

9. Solid oxide fuel stack according to any of the preceding claims, comprising at least one row of tubular solid oxide fuel cells (1) arranged adjacent to each other, wherein the support plates (11) of the interconnectors (6) arranged adjacently, form a single support plate (11).

10. Solid oxide fuel stack according to any of the preceding claims, wherein the preload means (15) fix both interconnectors (6) together, transmitting the pressure to the corresponding tubular solid oxide fuel cell (1).

11. Solid oxide fuel stack according to the preceding claim, wherein the preload means (15) comprise screws (18) which pass through the support plates (11) arranged facing each other and nuts (17) through the screws (18) are fixed to the corresponding support plate (11).

## Patentansprüche

1. Feststoffoxid-Brennstoffzellenstapel, umfassend mindestens eine rohrförmige Feststoffoxid-Brennstoffzelle (1) und mindestens einen Verbinder (6), der mit der rohrförmigen Feststoffoxid-Brennstoffzelle (1) verbunden ist, wobei die rohrförmige Feststoffoxid-Brennstoffzelle (1) eine erste Elektrode (2), einen Elektrolyten (3), der auf die erste Elektrode (2) aufgebracht ist, eine zweite Elektrode (4), die auf den Elektrolyten (3) aufgebracht ist, und einen Metallträger (5) umfasst, der auf der zweiten Elektrode (4) angeordnet ist, **dadurch gekennzeichnet, dass** die rohrförmige Feststoffoxid-Brennstoffzelle (1) mit zwei Verbindern (6) verbunden ist, die im Wesentlichen parallel zueinander angeordnet sind und einander gegenüberliegen, wobei jeder Verbinder (6) eine starre Trägerplatte (11) und Kontaktmittel (8) umfasst, die eine Mehrzahl von Kontaktplatten (10; 16) umfassen, die quer entlang des Metallträgers (5) angeordnet sind, wobei jede Kontaktplatte (10; 16) an der Trägerplatte (11) befestigt ist und mindestens eine Kontaktfläche (10c; 16c) umfasst, die in Bezug auf die Trägerplatte (11) flexibel und so ausgelegt ist, dass sie den permanenten elektrischen Kontakt jedes Verbinders (6) mit der rohrförmigen Feststoffoxid-Brennsstoffzelle (1) sichert, und dadurch, dass der Feststoffoxid-Brennstoffzellenstapel Vorspannungsmittel (15) umfasst, durch welche die Verbinder einen im Voraus fetgelegten Druck gegen die Feststoffoxid-Brennstoffzelle (1) aufrechterhalten.

2. Feststoffoxid-Brennstoffzellenstapel nach Anspruch 1, wobei der Metallträger (5) rohrförmig ist.

3. Feststoffoxid-Brennstoffzellenstapel nach einem der vorhergehenden Ansprüche, wobei die Trägerplatten (11) und die Kontaktplatten (10; 16) aus Metall hergestellt sind.

4. Feststoffoxid-Brennstoffzellenstapel nach einem der vorhergehenden Ansprüche, wobei die Trägerplatte (11) Löcher (12) umfasst, welche den Luftdurchtritt zur rohrförmigen Feststoffoxid-Brennstoffzelle (1) verbessern.

5. Feststoffoxid-Brennstoffzellenstapel nach einem der vorhergehenden Ansprüche, wobei jede Kontaktplatte (10) mindestens zwei durchgehende und zueinander geneigte Kontaktflächen (10c) umfasst, wobei beide in elektrischem Kontakt mit dem Metallträger (5) angeordnet sind.

6. Feststoffoxid-Brennstoffzellenstapel nach einem der vorhergehenden Ansprüche, wobei jede Kontaktplatte (10) einen W-förmigen Querschnitt aufweist.

7. Feststoffoxid-Brennstoffzellenstapel nach einem der Ansprüche 1 bis 4, wobei die Kontaktplatte (16) mindestens zwei Kontaktflächen (16c) umfasst, welche eine gekrümmte Oberfläche aufweist, die an die äußere Form der rohrförmigen Feststoffoxid-Brennstoffzelle (1) angepasst ist, wobei jede Kontaktfläche (16c) mindestens ein Ende aufweist, das mit einer Befestigungsfläche (16b) durch eine Verbindungsfläche (16d) verbunden ist, wobei die Befestigungsfläche (16b) an der Trägerplatte (11) befestigt ist.

8. Feststoffoxid-Brennstoffzellenstapel nach einem der vorhergehenden Ansprüche, umfassend mindestens eine Reihe von rohrförmigen Feststoffoxid-Brennstoffzellen (1), die benachbart zueinander angeordnet sind, wobei die Kontaktplatten (10; 16) der benachbart angeordneten Verbinder (6) eine einzige Kontaktplatte (10; 16) bilden.

9. Feststoffoxid-Brennstoffzellenstapel nach einem der vorhergehenden Ansprüche, umfassend mindestens eine Reihe von rohrförmigen Feststoffoxid-Brennstoffzellen (1), die benachbart zueinander angeordnet sind, wobei die Trägerplatten (11) der benachbart angeordneten Verbinder (6) eine einzige Trägerplatte (11) bilden.

10. Feststoffoxid-Brennstoffzellenstapel nach einem der vorhergehenden Ansprüche, wobei die Vorspannungsmittel (15) beide Verbinder (6) aneinander befestigen und den Druck auf die entsprechende rohrförmige Feststoffoxid-Brennstoffzelle (1) übertragen.

11. Feststoffoxid-Brennstoffzellenstapel nach einem der vorhergehenden Ansprüche, wobei die Vorspannungsmittel (15) Schrauben (18), welche durch die Trägerplatten (11) durchtreten, die einander gegenüber angeordnet sind, und Muttern (17) umfassen, durch welche die Schrauben an der entsprechenden Trägerplatte (11) befestigt sind.

## Revendications

1. Empilement de combustible à oxyde solide comprenant au moins une pile à combustible à oxyde solide tubulaire (1) et au moins un interconnecteur (6) associé à la pile à combustible à oxyde solide tubulaire (1), la pile à combustible à oxyde solide tubulaire (1) comprenant une première électrode (2), un électrolyte (3) déposé sur la première électrode (2), une deuxième électrode (4) déposée sur l'électrolyte (3), et un support métallique (5) agencé sur la deuxième électrode (4), **caractérisé en ce que** la pile à combustible à oxyde solide tubulaire (1) est associée à deux interconnecteurs (6) agencés sensiblement parallèlement l'un à l'autre et se faisant face mutuellement, chaque interconnecteur (6) comprenant une plaque de support (11) rigide et des moyens de contact (8) comprenant une pluralité de plaques de contact (10 ; 16) agencées transversalement le long du support métallique (5), chaque plaque de contact (10 ; 16) est fixée à la plaque de support (11) et comprend au moins une surface de contact (10c ; 16c) flexible par rapport à la plaque de support (11) et conçue pour assurer le contact électrique permanent de chaque interconnecteur (6) avec la pile à combustible à oxyde solide tubulaire (1), et **en ce que** l'empilement de combustible à oxyde solide comprend des moyens de précharge (15) par l'intermédiaire desquels les interconnecteurs (6) maintiennent une pression fixée au préalable contre la pile à combustible à oxyde solide (1).

2. Empilement de combustible à oxyde solide selon la revendication 1, dans lequel le support métallique (5) est tubulaire.

3. Empilement de combustible à oxyde solide selon l'une quelconque des revendications précédentes, dans lequel les plaques de support (11) et les plaques de contact (10 ; 16) sont constituées de métal.

4. Empilement de combustible à oxyde solide selon l'une quelconque des revendications précédentes, dans lequel la plaque de support (11) comprend des trous (12) qui améliorent le passage d'air vers la pile à combustible à oxyde solide tubulaire (1).

5. Empilement de combustible à oxyde solide selon l'une quelconque des revendications précédentes, dans lequel chaque plaque de contact (10) comprend au moins deux surfaces de contact (10c), continues et inclinées l'une par rapport à l'autre, toutes deux étant agencées en contact électrique avec le support métallique (5).

6. Empilement de combustible à oxyde solide selon la revendication précédente, dans lequel chaque plaque de contact (10) a une section en forme de W.

7. Empilement de combustible à oxyde solide selon l'une quelconque des revendications 1 à 4, dans lequel chaque plaque de contact (16) comprend au moins deux surfaces de contact (16c) qui ont une surface incurvée, adaptée à la forme extérieure de la pile à combustible à oxyde solide tubulaire (1), chaque surface de contact (16c) ayant au moins une extrémité connectée à une surface de fixation (16b) par l'intermédiaire d'une surface de connexion (16d), la surface de fixation (16b) étant fixée à la plaque de support (11).

8. Empilement de combustible à oxyde solide selon l'une quelconque des revendications précédentes, comprenant au moins une rangée de piles à combustible à oxyde solide tubulaires (1) agencées adjacentes les unes aux autres, dans lequel les plaques de contact (10 ; 16) des interconnecteurs (6) agencées de manière adjacente forment une plaque de contact (10 ; 16) unique.

9. Empilement de combustible à oxyde solide selon l'une quelconque des revendications précédentes, comprenant au moins une rangée de piles à combustible à oxyde solide tubulaires (1) agencées adjacentes les unes aux autres, dans lequel les plaques de support (11) des interconnecteurs (6) agencées de manière adjacente forment une plaque de support (11) unique.

10. Empilement de combustible à oxyde solide selon l'une quelconque des revendications précédentes, dans lequel les moyens de précharge (15) fixent les deux interconnecteurs (6) l'un à l'autre, transmettant la pression à la pile à combustible à oxyde solide tubulaire (1) correspondante.

11. Empilement de combustible à oxyde solide selon la revendication précédente, dans lequel les moyens de précharge (15) comprennent des vis (18) qui passent à travers les plaques de support (11) agencées de manière à se faire face mutuellement et des écrous (17) par l'intermédiaire des vis (18) sont fixés à la plaque de support (11) correspondante.
